# EUROPEAN PATENT SPECIFICATION

(11) **EP 4 435 641 B1**
(45) Date of publication and mention of the grant of the patent: **22.07.2026**
(21) Application number: 22903414.5
(22) Date of filing: 05.12.2022
(51) Int. Cl.: G06F 21/53, G06F 9/455

(54) **CONTAINER OPERATION METHOD AND APPARATUS, ELECTRONIC DEVICE, AND STORAGE MEDIUM**
VERFAHREN UND VORRICHTUNG ZUM BETRIEB EINES BEHÄLTERS, ELEKTRONISCHE VORRICHTUNG UND SPEICHERMEDIUM
PROCÉDÉ ET APPAREIL DE FONCTIONNEMENT DE CONTENEUR, DISPOSITIF ÉLECTRONIQUE ET SUPPORT DE STOCKAGE

(30) Priority: 07.12.2021 CN 202111484516
(43) Date of publication of application: 25.09.2024
(73) Proprietor: ZTE Corporation, Shenzhen, Guangdong 518057 (CN)
(72) Inventor: RAN, Xiaokai, Shenzhen, Guangdong 518057 (CN); JIANG, Xuexin, Shenzhen, Guangdong 518057 (CN); YANG, Yang, Shenzhen, Guangdong 518057 (CN)
(74) Representative: Osterhoff, Utz
(86) International application number: PCT/CN2022/136683
(87) International publication number: WO 2023/103992

(56) References cited:
- CN-A- 106 845 183
- CN-A- 109 802 955
- CN-A- 113 065 108
- CN-A- 113 221 103
- CN-A- 113 672 974
- US-A1- 2016 366 104
- US-A1- 2016 366 104
- US-A1- 2017 185 752
- US-A1- 2019 273 744
- ANONYMOUS SNYK ET AL: "Kubernetes securityContext Linux capabilities in Kubernetes | Snyk Blog | Snyk", 26 January 2021 (2021-01-26), XP093217154, Retrieved from the Internet <URL:https://snyk.io/blog/kubernetes-securitycontext-linux-capabilities/> [retrieved on 20241022]

## Description

### TECHNICAL FIELD

Embodiments of the present application relate to the technical field of computer processing, and in particular to a method for operating a container, an apparatus, an electronic device, and a storage medium.

### BACKGROUND

Container technology refers to effectively dividing the resources of a single operating system into isolated groups, so as to better balance conflicting resource usage requirements among isolated groups. That is, resource isolation is generated to solve the problem of multiple operating system/application stacks.

Privileged containers (containers in privileged mode) have almost all system permissions, and can directly modify host operating parameters, use system memory and central processing unit (CPU) resources without restriction, access and modify host sensitive data, and delete host key files. Privileged containers have access to the global resources of the system, which also breaks the original design intention of container technology: resource isolation, that is, containers can only access local resources in the container name space. Therefore, privileged containers operating abnormally will pose a major threat to system security.

In US20160366104A1, methods, computing systems and computer program products implement embodiments that include defining a first multiple of software container configurations and a second multiple of permission sets, and receiving, by a first computer, a request to perform a service operation on a second computer having multiple resources. Upon identifying one or more of the resources that are required for the service operation, a given software container configuration and a given permission set are selected based on the identified one or more resources, and the given software container configuration and the given permission set are conveyed to the second computer. Upon the second computer receiving the given software container configuration and the given permission set, a software container is generated. The software container is opened on the host computer prior to performing the service operation, and closed upon completing the service operation.

In US20170185752A1, solutions for controlling data exposure among computing entities are described. A data transfer agent (DTA) module includes a data payload portion to store information content conditionally transferable to at least one other DTA module, and a code portion containing instructions that operationally implement: a DTA connectivity link to the at least one other DTA module; an attestation module to obtain, via the DTA connectivity link, attestation from each of the at least one other DTA module indicating a data output connectivity configuration of that other DTA module; and a decision module to determine a degree of permissible interaction with each of the at least one other DTA module based the attestation and on decision criteria.

In US20190273744A1, the disclosed computer-implemented method for running applications on a multi-tenant container platform may include receiving, at a host administrator service on a container host computing device and via a host administrator service socket handle, a request for a privileged operation from an application running in a non-privileged container, performing, based on a user identifier of the application, a security check of a user associated with the application, comparing, when the security check results in approval, a process identifier of the requested privileged operation against a whitelist of permitted operations to determine the requested privileged operation is permissible, and initiating running, when the requested privileged operation is permissible, the requested privileged operation. Various other methods, systems, and computer-readable media are also disclosed.

Related technologies are also known from Anonymous Snyk ET AL: "Kubernetes security Context Linux capabilities in Kubernetes |Snyk Blog |Snyk", 26 January 2021 (2021-01-26), XP093217154, Retrieved from the Internet: URL: https://snyk.io/blog/kubernetes-securitycontext-linux-capabilities/.

### SUMMARY

The main purpose of the embodiments of the present application is to provide a method for operating a container, aiming to reclaim redundant permissions of privileged containers, and ensure the security of system resources. The invention is defined by the appended claims.

To achieve the above purpose, the embodiment of the present application provides a method for operating a container, including: obtaining a minimum permission set required for the container to operate; starting the container in a non-privileged mode, and passing the minimum permission set to the container as a parameter; and starting an original process of the container, and configuring the minimum permission set as a permission set of the original process; the obtaining the minimum permission set required for the container to operate includes: initializing the minimum permission set of the container to be empty, and operating the container in the non-privileged mode; obtaining a permission for privileged operation requested by the container from a system in the non-privileged mode, adding the requested permission to the minimum permission set, granting the requested permission to the container, and ensuring a normal operation of the container during an operation process of the container; and shutting down the container, and outputting the minimum permission set after a preset initialization end condition is met.

In order to achieve the above purpose, the embodiment of the present application also provides a device for operating a container, including: an obtaining module, configured to obtain a minimum permission set required for the container to operate; a transferring module, configured to start the container in a non-privileged mode, and transfer the minimum permission set to the container as a parameter; and a starting module, configured to start an original process of the container, configure the minimum permission set as a permission set of the original process; the obtaining module is further configured to initialize the minimum permission set of the container to be empty, and operate the container in the non-privileged mode; obtain a permission for privileged operation requested by the container from a system in the non-privileged mode, add the requested permission to the minimum permission set, grant the requested permission to the container, and ensure a normal operation of the container during an operation process of the container; and shut down the container, and output the minimum permission set after a preset initialization end condition is met.

To achieve the above purpose, an embodiment of the present application further provides an electronic device, including: at least one processor; and a memory communicatively connected to the at least one processor; the memory stores instructions executable by the at least one processor, and the instructions are executed by the at least one processor, so that the method for operating the container is performed by the at least one processor.

To achieve the above purpose, an embodiment of the present application further provides a computer-readable storage medium, storing a computer program, and when the computer program is executed by a processor, the method for operating the container is realized.

In the embodiment of the present application, a method for operating a container is provided. For a privileged container, the minimum permission set required for the normal operation of the container is screened out; the container is started in non-privileged mode; the minimum permission set is passed to the container as a parameter; after the original process of the container is started, the container has only the permissions in the minimum permission set. In this way, unnecessary permissions are deleted, privileged containers are converted into non-privileged containers, and threats to system security caused by abnormal operation of privileged containers are reduced.

### BRIEF DESCRIPTION OF THE DRAWINGS

FIG. 1 is a flowchart of a method for operating a container according to an embodiment of the present application.
FIG. 2 is a flowchart of a device for operating a container according to an embodiment of the present application.
FIG. 3 is a schematic structural diagram of an electronic device according to an embodiment of the present application.

### DETAILED DESCRIPTION OF THE EMBODIMENTS

In order to make the purpose, technical solutions and advantages of the embodiments of the present application clearer, the embodiments of the present application will be described in detail below with reference to the accompanying drawings. However, those skilled in the art can understand that in each embodiment of the present application, many technical details are provided for readers to better understand the present application. However, even without these technical details and various changes and modifications based on the following embodiments, the technical solutions claimed in the present application can also be realized. The division of the following embodiments is for the convenience of description, and should not constitute any limitation to the specific implementation of the present application, and the embodiments can be combined and referred to each other on the premise of no contradiction.

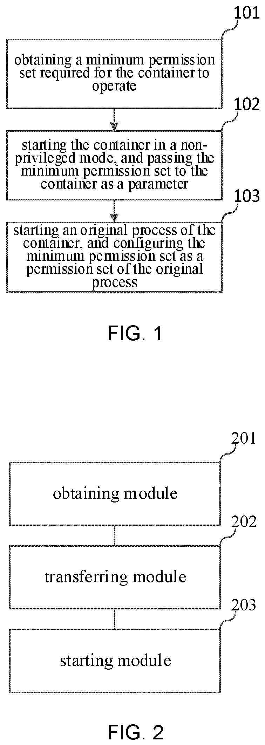

An embodiment of the present application relates to a method for operating a container. The specific process is shown in FIG. 1, at least including the following steps:
Step 101, obtaining a minimum permission set required for the container to operate;
Step 102, starting the container in a non-privileged mode, and passing the minimum permission set to the container as a parameter;
Step 103, starting an original process of the container, and using the minimum permission set as a permission set of the original process.

The implementation details of the method for operating the container in this embodiment are described in detail below, and the following content is only implementation details provided for easy understanding, and is not necessary for implementing this solution.

In step 101, the minimum permission set required for the container to operate is obtained. Since the container is created to complete or realize the corresponding service, the minimum permission set required for the container to operate is also the minimum permission required for the normal operation of the service.

In one example, obtaining the minimum permission set required for the container to operate includes: initializing the minimum permission set of the container to be empty, and operating the container in a non-privileged mode; obtaining a permission for privileged operation requested by the container from a system in the non-privileged mode, adding the requested permission to the minimum permission set, granting the requested permission to the container, and ensuring a normal operation of the container during an operation process of the container; and shutting down the container, and outputting the minimum permission set after a preset initialization end condition is met. Among them, the container is operated in non-privileged mode, that is, the container cannot implement privileged operations at the beginning. Since the minimum permission set of the container is cleared at the beginning, the container does not have any permissions to perform privileged operations; but there are corresponding service needs to be completed when the container is generated, so during the operation process, the system will still request the permission to realize the privileged operation of the service; and the system will grant the corresponding permission to the container according to the request, so that the container can continue to request other permissions, and add the permission granted by the system to the minimum permission set of the current container, thereby gradually enriching the contents of the container's minimum permission set. After the preset initialization end condition is met, the operation of the container is closed, and the final minimum permission set output will be obtained. Here, the normal operating of the container may mean that the process of the container making the permission request operates normally.

In an example, the preset initialization end condition includes: all the permissions requested by the container are within the minimum permission set. Among them, the judging method that the permissions requested by the container are all within the minimum permission set, for example, during the process of N consecutive requests for permissions (N is not less than the preset first threshold), the requested permissions are all within the minimum permission set, then it is judged that the permissions requested by the container are all within the minimum permission set; or, in the process of continuously requesting permissions for not less than the preset second threshold, the requested permissions are all within the minimum permission set, then it is judged that the permissions requested by the container are within the minimum permission set.

In a specific implementation, first, the system enables the permission testing function, that is, pre-processing the container permission request, starting the container in a non-privileged mode, and trying to call a privileged operation by the container after startup, that is, the permission for the system to request a privileged operation; the system determines the requesting container according to the received request process, and obtains the container information. When receiving the permission request, the system judges whether the minimum permission set in the container information contains the permission. If it is not included, adding the request permission to the minimum permission set, and continuing to receive the next permission request of the container; if it is included, then receiving the next privilege request of the container; in the process of consecutive requests not less than the first threshold, all requested permissions are within the minimum permission set, or in the process of consecutive requests not less than the second threshold, all requested permissions are within the minimum permission set; it is judged that the permissions required by the container are all within the minimum permission set, and the current minimum permission set is the final minimum permission set, which can be output.

In another example, the preset initialization end condition is for example: adding the requested permission to the minimum permission set until the service corresponding to the container is implemented; the service corresponding to the container is generated when the container is established. Since there is a service that needs to be implemented when the container is generated (that is, the service corresponding to the container), the requested permission has been added to the minimum permission set until it is detected that the service that needs to be implemented is normally executed for the first time, and it is determined that the current permissions requested by the container are all within the minimum permission set. If there are multiple stages of the service to be executed, and the permissions required for each stage are not completely consistent, the corresponding initialization end condition is that the multiple stages need to be traversed; and the multiple stages are detected to operate normally, it is determined that the service corresponding to the container is realized to operate; for example, if there are three stages, it is necessary to determine that the permissions requested by the current container are all within the minimum permission set after the three stages are all executed normally for the first time. The conditions for detecting whether the service is operating here support preset and customization.

In addition, granting the permissions requested by the container is mainly to obtain the minimum permission set, that is, it is not a permanent grant of permissions. When the minimum permission set is formed and output, the permissions granted to the current container will be withdrawn. That is to say, the requested permissions are temporarily granted to the container.

In a specific implementation, when a permission request is received, it is judged whether the minimum permission set in the privileged container information includes the permission; and if not, the permission is temporarily granted to the container, and the permission is placed in the minimum permission set. When the service that the container needs to realize is operating normally, it means that the necessary permissions for the container have been obtained; that is, the necessary permissions for the normal operation of the container are all within the minimum permission set; then the generation of the minimum permission set has been completed, and the obtained minimum permission set can be output. The above-mentioned temporary granting of container permissions refers to granting permissions during the process of generating but not completing the minimum permission set before the minimum permission set is output. When the service corresponding to the container can be executed normally, it is judged that the minimum permission set has been successfully obtained. There is no need to set a threshold to judge whether the minimum permission set has been obtained, thereby reducing the preparation work that needs to be implemented, and directly judging by the execution status of the service, so that the obtained minimum permission set is more accurate and the user experience is improved.

In step 102, the container is started in a non-privileged mode, and the minimum permission set is passed to the container as a parameter. That is, after obtaining the minimum permission set, the container is restarted in a non-privileged mode, and the container initially operates in a state that does not have any permission for privileged operations. At this time, the minimum permission set obtained in step 101 is used as a parameter to give the current container, that is, the container can obtain the permissions in the above minimum permission set. The container is prevented from obtaining unnecessary permissions, thereby threatening the security of other data in the system.

In step 103, the original process of the container is started, and the minimum permission set is used as the permission set of the original process. The container is started according to the original process of the container, that is, the container operates according to the service that needs to be realized originally, and has the permissions obtained in the minimum permission set during the operation process. When the minimum permission set is obtained above, the container operates in the first state. The first state is only used to obtain the minimum permission set, and does not actually perform service operations. For example, it can be called a test state; in this step, the container operates in the second state after starting, and the second state is usually the actual execution of service, for example, it can be called the production state; in addition, the operating environment of the first state and the second state is not limited, and the first state and the second state can operate in the same environment, or operate in different environments; the switching between the first state and the second state can be triggered according to preset transition conditions, such as the generation or transfer of the minimum permission set, or receiving a manual input switching command, or manually pressing the switch button etc.

In one example, starting the original process of the container, and configuring the minimum permission set as the permission set of the original process includes: mapping the system tool to the space of the container; operating the system tool as the initialization process of the container, and using the minimum permission set as the permission set of the system tool; starting the original process of the container through the system tool, and inheriting the permission set of the system tool to the permission set of the original process. Specifically, starting the container in non-privileged mode, passing the minimum permission set to the container as a parameter, that is, giving the container the permission of the minimum permission set; using the mapping method to map the system tool to the container space, and operating the system tool as the initialization process of the container; the system tool receives the minimum permission set passed by the container, and uses the permission set to set its own permission set, such as using the minimum permission set as its own permission set; the system tool calls the execution file to start the original process of the container; according to the permission inheritance rules, the permission set of the system tool becomes the permission set of the execution file of the original process of the container through inheritance, that is, the minimum permission set is the permission set of the execution file of the original process of the container; the original process of the container obtains the minimum permission set required for normal operation; during the operating of the container, unnecessary permissions are deleted, that is, the container does not have unnecessary permissions during the operation process, which is used to limit the data acquisition permissions of the container and improve the security of other data in the system.

In one example, the system tool includes: capinit tool. Specifically, this embodiment provides a two-level system tool capinit, which accepts the minimum permission set passed when starting the container, and passes the minimum permission set to the original process of the container, that is, to the service process in the container, For example: capinit receives a minimum permission set as a runtime parameter; the permission setting (setcap) command is used to give the capinit tool CAP_SETPCAP permission, and CAP_SETPCAP is the ability to transfer capabilities to other processes and delete other processes. At this time, even ordinary users operate capinit, they can change their own permissions; capinit uses the minimum permission set passed when starting the container to elevate its ambient permissions; capinit calls the execution file (execve) to start the container process.

In a specific implementation process, when the system tool is the capinit tool, after obtaining the minimum permission set required for the container to operate, for example: starting the container in non-privileged mode, and passing the minimum permission set as a parameter to the current container; using the mapped method to map capinit to the container space, and operating capinit to complete the initialization process of the container; the capinit tool accepts the minimum permission set passed by the container, and uses the permission set to set its own ambient permission set, for example, setting its own ambient permission set with the minimum permission set to be consistent; the capinit tool calls execve to start the original process of the container. According to the permission inheritance rules, the ambient permission set of capinit becomes the effective permission set of the original process of the container through inheritance. For example, the effective permission set of the original process of the container changes to be consistent with the minimum permission set. **In** this way, the original process of the container obtains the minimum permission set required for normal operation, and the unnecessary permissions of the original privileged container are deleted, thereby preventing the container from requesting unnecessary data without restrictions, and improving the security of data in the system.

In this embodiment, a method for operating a container is provided. For a privileged container, the minimum permission set required for the normal operation of the container is screened out, and the container is given the necessary minimum permission set without making a container image; the unnecessary permission is deleted, the privileged container is converted into a non-privileged container, and the threat to system security caused by the abnormal operation of the privileged container is reduced.

Another embodiment of the present application relates to a device for operating a container. The details of the scheduling system in this embodiment will be described in detail below. The following content is only the implementation details provided for the convenience of understanding, and is not necessary for the implementation of this embodiment. FIG. 2 is the schematic diagram of the device for operating the container described in the embodiment. The device for operating the container includes:
An obtaining module, configured to obtain a minimum permission set required for the container to operate;
A transferring module, configured to start the container in a non-privileged mode, and transfer the minimum permission set to the container as a parameter; and
A starting module, configured to start an original process of the container, configure the minimum permission set as a permission set of the original process.

For the obtaining module 201, in an example, obtaining the minimum permission set required for the container to operate includes: initializing the minimum permission set of the container to be empty, and operating the container in a non-privileged mode; during the operating of the container, obtaining the permission requested by the container from the system to perform privileged operations in the non-privileged mode; and adding the requested permission to the minimum permission set, granting the requested permission to the container, and ensuring the normal operation of the container; closing the operating of the container, and outputting the minimum permission set after the preset initialization end condition is met.

In an example, the preset initialization end condition includes: all the permissions requested by the container are within the minimum permission set.

In another example, the preset initialization end condition includes: adding the requested permission to the minimum permission set until the service corresponding to the container is implemented; the service corresponding to the container is generated when the container is established.

For the starting module 203, starting the original process of the container, and using the minimum permission set as the permission set of the original process, for example: mapping the system tool into the space of the container; operating the system tool as the initialization process of the container, using the minimum permission set as the permission set of the system tool; starting the original process of the container through the system tool, and inheriting the permission set of the system tool to the permission set of the original process.

In one example, the system tools include: capinit tool.

In this embodiment, the device for operating the container is provided. For a privileged container, the minimum permission set required for the normal operation of the container is screened out; the minimum permission set is given to the container without the need to create a container image; unnecessary permissions are deleted; the privileged container is converted into a non-privileged container, and the threat to system security caused by the abnormal operation of the privileged container is reduced.

It is not difficult to find that this embodiment is a system embodiment corresponding to the above method embodiment, and this embodiment can be implemented in cooperation with the above method embodiment. The relevant technical details and technical effects mentioned in the above embodiments are still valid in this embodiment, and will not be repeated here to reduce repetition. Correspondingly, the relevant technical details mentioned in this embodiment can also be applied in the above embodiments.

It is worth mentioning that all the modules involved in this embodiment are logical modules. In practical applications, a logical unit can be a physical unit, or a part of a physical unit, or a combination of multiple physical units. In addition, in order to highlight the innovative part of the present application, units that are not closely related to solving the technical problem proposed in the present application are not introduced in this embodiment, but this does not mean that there are no other units in this embodiment.

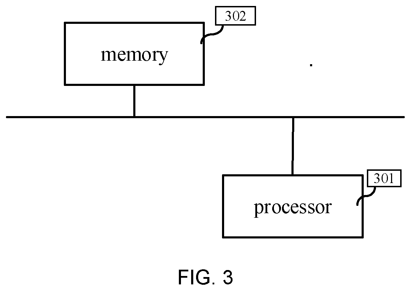

Another embodiment of the present application relates to an electronic device, as shown in FIG. 3, including: at least one processor 301; and a memory 302 communicatively connected to the at least one processor 301; the memory 302 stores instructions that can be executed by the at least one processor 301; the instructions are executed by the at least one processor 301, so that the at least one processor 301 can execute the method for operating the container in the foregoing embodiments.

The memory and the processor are connected by a bus, and the bus may include any number of interconnected buses and bridges; the bus connects one or more processors and various circuits of the memory together. The bus may also connect together various other circuits such as peripherals, voltage regulators, and power management circuits, all of which are well known in the art and therefore will not be further described herein. The bus interface provides an interface between the bus and the transceiver. A transceiver may be a single element or multiple elements, such as multiple receivers and transmitters, providing units for communicating with various other devices over a transmission medium. The data processed by the processor is transmitted on the wireless medium through the antenna, further, the antenna also receives the data and transmits the data to the processor.

The processor is responsible for managing the bus and general processing, and can also provide various functions, including timing, peripheral interface, voltage regulation, power management, and other control functions. Instead, memory can be used to store data that the processor uses when performing operations.

Another embodiment of the present application relates to a computer-readable storage medium storing a computer program. The above method embodiments are implemented when the computer program is executed by the processor.

That is, those skilled in the art can understand that all or part of the steps in the method of the above-mentioned embodiments can be completed by instructing related hardware through a program; the program is stored in a storage medium, and includes several instructions to make a device ( it may be a single-chip microcomputer, a chip, etc.) or a processor to execute all or part of the steps of the methods described in the various embodiments of the present application. The aforementioned storage media includes: U disk, mobile hard disk, read-only memory (ROM), random access memory (RAM), magnetic disk or optical disc, etc., which can store program codes.

Those skilled in the art can understand that the above-mentioned implementation modes are specific embodiments for realizing the present application, and in practical applications, various changes can be made to it in form and details without departing from the scope of the present application.

## Claims

1. A method for operating a container, **characterized by** comprising:
(S101), obtaining a minimum permission set required for the container to operate;
(S102), starting the container in a non-privileged mode, and passing the minimum permission set to the container as a parameter; and
(S103), starting an original process of the container, and configuring the minimum permission set as a permission set of the original process;
wherein the (S101), obtaining the minimum permission set required for the container to operate comprises:
initializing the minimum permission set of the container to be empty, and operating the container in the non-privileged mode;
obtaining a permission for privileged operation requested by the container from a system in the non-privileged mode, adding the requested permission to the minimum permission set, granting the requested permission to the container, and ensuring a normal operation of the container during an operation process of the container; and
shutting down the container, and outputting the minimum permission set after a preset initialization end condition is met.

2. The method for operating the container according to claim 1, wherein the preset initialization end condition comprises:
the permission requested by the container being all within the minimum permission set.

3. The method for operating the container according to claim 1, wherein the preset initialization end condition comprises:
adding the requested permission to the minimum permission set until a service corresponding to the container is implemented, wherein the service corresponding to the container is generated in response to that the container is established.

4. The method for operating the container according to any one of claims 1 to 3, wherein the (S103), starting the original process of the container, and configuring the minimum permission set as the permission set of the original process comprises:
mapping a system tool into a space of the container;
operating the system tool as an initialization process of the container, and configuring the minimum permission set as the permission set of the system tool; and
starting the original process of the container by the system tool, and inheriting the permission set of the system tool to the permission set of the original process.

5. The method for operating the container according to claim 4, wherein the system tool comprises: a capinit tool.

6. A device for operating a container, **characterized by** comprising:
an obtaining module (201), configured to obtain a minimum permission set required for the container to operate;
a transferring module (202), configured to start the container in a non-privileged mode, and transfer the minimum permission set to the container as a parameter; and
a starting module (203), configured to start an original process of the container, configure the minimum permission set as a permission set of the original process;
wherein the obtaining module (201) is further configured to initialize the minimum permission set of the container to be empty, and operate the container in the non-privileged mode; obtain a permission for privileged operation requested by the container from a system in the non-privileged mode, add the requested permission to the minimum permission set, grant the requested permission to the container, and ensure a normal operation of the container during an operation process of the container; and shut down the container, and output the minimum permission set after a preset initialization end condition is met.

7. An electronic device, **characterized by** comprising:
at least one processor (301); and
a memory (302) communicatively connected to the at least one processor;
wherein the memory (302) stores instructions executable by the at least one processor (301), and the instructions are executed by the at least one processor (301), so that the method for operating the container according to any one of claims 1 to 5 is performed by the at least one processor (301).

8. A computer-readable storage medium, storing a computer program, **characterized in that** when the computer program is executed by a processor, the method for operating the container according to any one of claims 1 to 5 is realized.

## Patentansprüche

1. Verfahren zum Betreiben eines Containers, **dadurch gekennzeichnet, dass** es umfasst:
(S101) Erhalten eines Mindestberechtigungssatzes, der für den Betrieb des Containers erforderlich ist;
(S102), Starten des Containers in einem nicht privilegierten Modus und Übergeben des Mindestberechtigungssatzes als Parameter an den Container;
(S103), Starten eines ursprünglichen Prozesses des Containers und Konfigurieren des Mindestberechtigungssatzes als Berechtigungssatz des ursprünglichen Prozesses;
wobei das Erhalten (S101) des Mindestberechtigungssatz, der für den Betrieb des Containers erforderlich ist, umfasst:
Initialisieren des Mindestberechtigungssatzes des Containers als leer und Betreiben des Containers im nicht privilegierten Modus;
Erhalten einer Berechtigung für eine privilegierte Operation, die von dem Container in dem nichtprivilegierten Modus bei einem System angefordert wird, Hinzufügen der angeforderten Berechtigung zu dem Mindestberechtigungssatz, Gewähren der angeforderten Berechtigung an den Container und Sicherstellen eines normalen Betriebs des Containers während eines Betriebsprozesses des Containers; und
Abschalten des Containers und Ausgeben des Mindestberechtigungssatzes, nachdem eine voreingestellte Initialisierungsendbedingung erfüllt ist.

2. Verfahren zum Betreiben des Containers nach Anspruch 1, wobei die voreingestellte Initialisierungsendbedingung umfasst:
die vom Container angeforderte Berechtigung vollständig innerhalb des Mindestberechtigungssatzes liegt.

3. Verfahren zum Betreiben des Containers nach Anspruch 1, wobei die voreingestellte Initialisierungsendbedingung umfasst:
Hinzufügen der angeforderten Berechtigung zum Mindestberechtigungssatz, bis ein dem Container entsprechender Dienst implementiert ist, wobei der dem Container entsprechende Dienst als Reaktion darauf generiert wird, dass der Container eingerichtet ist.

4. Verfahren zum Betreiben des Containers nach einem der Ansprüche 1 bis 3, wobei das Starten (S103) des ursprünglichen Prozesses des Containers und Konfigurieren des Mindestberechtigungssatzes als Berechtigungssatz des ursprünglichen Prozesses umfasst:
Abbilden eines Systemwerkzeugs in einen Bereich des Containers;
Betreiben des Systemwerkzeugs als einen Initialisierungsprozess des Containers und Konfigurieren des Mindestberechtigungssatzes als Berechtigungssatz des Systemwerkzeugs; und
Starten des ursprünglichen Prozesses des Containers durch das Systemwerkzeug und Vererben des Berechtigungssatzes des Systemwerkzeugs an den Berechtigungssatz des ursprünglichen Prozesses.

5. Verfahren zum Betreiben des Containers nach Anspruch 4, wobei das Systemwerkzeug ein capinit-Werkzeug umfasst.

6. Vorrichtung zum Betreiben eines Containers, **dadurch gekennzeichnet, dass** sie umfasst:
ein Erhaltungsmodul (201), das dazu konfiguriert ist, einen für den Betrieb des Containers erforderlichen Mindestberechtigungssatz zu erhalten;
ein Übertragungsmodul (202), das dazu konfiguriert ist, den Container in einem nicht privilegierten Modus zu starten und den Mindestberechtigungssatz als Parameter an den Container zu übertragen;
ein Startmodul (203), das dazu konfiguriert ist, einen ursprünglichen Prozess des Containers zu starten, den Mindestberechtigungssatz als Berechtigungssatz des ursprünglichen Prozesses zu konfigurieren;
wobei das Erhaltungsmodul (201) ferner dazu konfiguriert ist, den Mindestberechtigungssatz des Containers als leer zu initialisieren und den Container im nicht privilegierten Modus zu betreiben; eine Berechtigung für eine privilegierte Operation zu erhalten, die von dem Container bei einem System in dem nicht privilegierten Modus angefordert wird; die angeforderte Berechtigung zu dem Mindestberechtigungssatz hinzuzufügen, die angeforderten Berechtigung an den Container zu gewähren und einen normalen Betrieb des Containers während eines Betriebsprozesses des Containers sicherzustellen; und den Container abzuschalten und den Mindestberechtigungssatz auszugeben, nachdem eine voreingestellte Initialisierungsendbedingung erfüllt ist.

7. Elektronische Vorrichtung, **dadurch gekennzeichnet, dass** sie umfasst:
mindestens einen Prozessor (301); und
einen Speicher (302), der kommunikativ mit dem mindestens einen Prozessor verbunden ist;
wobei der Speicher (302) Anweisungen speichert, die durch den mindestens einen Prozessor (301) ausführbar sind, und wobei die Anweisungen durch den mindestens einen Prozessor (301) ausgeführt werden, so dass das Verfahren zum Betreiben des Containers nach einem der Ansprüche 1 bis 5 durch den mindestens einen Prozessor (301) durchgeführt wird.

8. Computerlesbares Speichermedium, das ein Computerprogramm speichert, **dadurch gekennzeichnet, dass**, wenn das Computerprogramm durch einen Prozessor ausgeführt wird, das Verfahren zum Betreiben des Containers nach einem der Ansprüche 1 bis 5 realisiert wird.

## Revendications

1. Procédé pour manipuler un conteneur, **caractérisé en ce qu'**il comprendre :
(S101), obtenir un ensemble minimal de permissions requis pour une manipulation du conteneur ;
(S102), démarrer le conteneur en mode non privilégié et transmettre l'ensemble minimal de permissions comme paramètre au conteneur ; et
(S103), démarrer un processus original du conteneur et configurer l'ensemble minimal de permissions comme ensemble de permissions du processus original ;
dans lequel la (S101), obtenir l'ensemble minimal de permissions requis pour une manipulation du conteneur comprend :
initialiser l'ensemble minimal de permissions du conteneur à vider, et manipuler le conteneur en mode non privilégié ;
obtenir une permission pour une manipulation privilégiée demandée par le conteneur à partir d'un système en mode non privilégié, ajouter la permission demandée à l'ensemble minimal de permissions, accorder la permission demandée au conteneur et assurer une manipulation normale du conteneur pendant un processus de manipulation du conteneur ; et
arrêter le conteneur, et exporter l'ensemble minimal de permissions après qu'une condition de fin d'initialisation prédéfinie soit atteinte.

2. Procédé pour manipuler un conteneur selon la revendication 1, dans lequel la condition de fin d'initialisation prédéfinie comprend :
la permission demandée par le conteneur étant entièrement incluse dans l'ensemble minimal de permissions.

3. Procédé pour manipuler un conteneur selon la revendication 1, dans lequel la condition de fin d'initialisation prédéfinie comprend :
ajouter la permission demandée à l'ensemble minimal de permissions jusqu'à ce qu'un service correspondant au conteneur soit mis en œuvre, le service correspondant au conteneur étant généré en réponse à ce que le conteneur soit établi.

4. Procédé pour manipuler un conteneur selon l'une quelconque des revendications 1 à 3, dans lequel la (S103), démarrer un processus original du conteneur et configurer l'ensemble minimal de permissions comme ensemble de permissions du processus original comprend :
mapper un outil systématique dans un espace du conteneur ;
manipuler l'outil systématique comme processus d'initialisation du conteneur, et configurer l'ensemble minimal de permissions comme ensemble de permissions de l'outil systématique ; et
démarrer le processus original du conteneur par l'outil systématique, et hériter de l'ensemble de permissions de l'outil systématique à l'ensemble de permissions du processus original.

5. Procédé pour manipuler un conteneur selon la revendication 4, dans lequel l'outil systématique comprend : un outil de capsulage

6. Dispositif pour manipuler un conteneur, **caractérisé en ce qu'**il comprendre :
un module d'obtention (201), configuré pour obtenir un ensemble minimal de permissions requis pour une manipulation du conteneur ;
un module de transfert (202), configuré pour démarrer le conteneur en mode non privilégié et transmettre l'ensemble minimal de permissions comme paramètre au conteneur ; et
un module de démarrage (203), configuré pour démarrer un processus original du conteneur et configurer l'ensemble minimal de permissions comme ensemble de permissions du processus original ;
dans lequel le module d'obtention (201) est en outre configuré pour initialiser l'ensemble minimal de permissions du conteneur à vider, et manipuler le conteneur en mode non privilégié ;
obtenir une permission pour une manipulation privilégiée demandée par le conteneur à partir d'un système en mode non privilégié, ajouter la permission demandée à l'ensemble minimal de permissions, accorder la permission demandée au conteneur et assurer une manipulation normale du conteneur pendant un processus de manipulation du conteneur ; et arrêter le conteneur, et exporter l'ensemble minimal de permissions après qu'une condition de fin d'initialisation prédéfinie soit atteinte.

7. Dispositif électronique, **caractérisé en ce qu'**il comprend :
au moins un processeur (301) ; et
une mémoire (302) connectée par communication au ou aux processeurs ;
dans lequel la mémoire (302) stocke des instructions exécutables par le ou les processeurs (301), et les instructions sont exécutées par le ou les processeurs (301), de sorte que le procédé pour manipuler un conteneur selon l'une quelconque des revendications 1 à 5 soit exécuté par le ou les processeurs (301).

8. Support de stockage lisible par ordinateur, stockant un programme informatique, **caractérisé en ce que** lorsque le programme informatique est exécuté par un processeur, le procédé pour manipuler un conteneur selon l'une quelconque des revendications 1 à 5 est mis en œuvre.
